# EUROPÄISCHE PATENTSCHRIFT

(11) **EP 2 217 652 B1**
(45) Veröffentlichungstag und Bekanntmachung des Hinweises auf die Patenterteilung: **17.08.2011**
(21) Anmeldenummer: 08855790.5
(22) Anmeldetag: 22.11.2008
(51) Int. Cl.: C08K 5/5337

(54) **VERWENDUNG VON PHOSPHINSÄUREN UND/ODER PHOSPHONSÄUREN IN POLYMERISATIONSVERFAHREN**
USE OF PHOSPHINIC ACIDS AND/OR PHOSPHONIC ACIDS IN POLYMERIZATION METHODS
UTILISATION D'ACIDES PHOSPHINIQUES ET/OU D'ACIDES PHOSPHONIQUES DANS LE CADRE DE PROCÉDÉS DE POLYMÉRISATION

(30) Priorität: 04.12.2007 DE 102007058600
(43) Veröffentlichungstag der Anmeldung: 18.08.2010
(73) Patentinhaber: Merck Patent GmbH, 64293 Darmstadt (DE)
(72) Erfinder: HIERSE, Wolfgang, 64846 Gross-Zimmern (DE); IGNATYEV, Nikolai (Mykola), 47058 Duisburg (DE)
(86) Internationale Anmeldenummer: PCT/EP2008/009920
(87) Internationale Veröffentlichungsnummer: WO 2009/071214

(56) Entgegenhaltungen:
- EP-A- 0 070 498
- EP-A- 0 238 825
- EP-A- 0 341 716
- GB-A- 1 572 863
- DATABASE WPI Week 199404 Thomson Scientific, London, GB; AN 1994-031992 XP002529345 -& JP 05 339537 A (ASAHI-ICI FLUOROPOLYMERS KK) 21. Dezember 1993 (1993-12-21)

## Beschreibung

Die vorliegende Erfindung betrifft die Verwendung von Phosphinsäuren und/oder Phosphonsäuren und deren Salzen zur Benetzung von Fluorverbindungen, vorzugsweise zur Herstellung von Suspensionen oder Emulsionen von Fluorverbindungen, die Verwendung in Beschichtungslösungen enthaltend Fluorverbindungen und die Verwendung in Suspensions- und Emulsionspolymerisationsverfahren, in denen Fluorverbindungen verwendet und/oder gebildet werden.

Die Benetzung und das Dispergieren von festen Fluorpolymerpartikeln oder das Emulgieren von flüssigen Fluorkohlenwasserstofftropfen in wässrigen Medien ist ein technisches Problem von großer Bedeutung, insbesondere bei der Herstellung von Fluorpolymere.

Eine wichtige technische Methode zur Herstellung von Fluorpolymeren wie z. B. Polytetrafluorethylen (PTFE) ist die Emulsionspolymerisation. Bei diesem Prozess wird das Polymer in einem Autoklaven, der Wasser, das oder die entsprechenden, meist gasförmigen, Monomere, Initiatoren, Tenside und andere Hilfsmittel enthält, unter Rühren und ständiger Temperatur- und Druckkontrolle hergestellt. Tenside werden u. a. dazu verwendet, die sehr hydrophoben Fluorpolymertropfen bzw. -teilchen in der wässrigen Lösung dispergiert zu halten.

Fluorpolymere wie PTFE werden vielfach als Additive in Beschichtungsformulierungen verwendet. Sie erniedrigen den Reibungskoeffizienten und die Oberflächenenergie der Beschichtung nach dem Härten und verbessern wichtige technische Parameter wie z. B. Kratzfestigkeit, schmutzabweisende Eigenschaften, u. s. w. Auch hier müssen die Fluorpolymerteilchen in der Beschichtungsformulierung, die wässrig oder nicht-wässrig sein kann, dispergiert werden.

Auch in Latexbeschichtungen basierend auf Fluorpolymerharzen müssen die Fluorpolymerteilchen in der normalerweise wässrigen Beschichtungsformulierung dispergiert sein, damit der Latex stabil bleibt und keine Phasentrennung auftritt.

In galvanischen Anwendungen, insbesondere im stromlosen Nickelprozess, werden manchmal Fluorpolymerteilchen in die auf dem Substrat geformte Metallschicht integriert, um Oberflächeneigenschaften, wie den Reibungskoeffizienten, zu verbessern. Auch hier müssen die Fluorpolymerteilchen zuerst wieder stabil in dem wässrigen Galvanikbad suspendiert werden, bevor sie auf dem Substrat abgeschieden werden können.

Um stabile Dispersionen oder Suspension von Fluorpolymeren in wässrigen Medien herzustellen, müssen Fluortenside verwendet werden, die sowohl eine hydrophile Kopfgruppe als auch eine perfluorierte Gruppe umfassen. Nicht-fluorierte Tenside mit Kohlenwasserstoff- oder Methylsiloxangruppen können normalerweise nicht eingesetzt werden, da Fluorpolymere sowohl hydrophob als auch lipophob sind.

In den letzten Jahren wurden einige Klassen von Fluortensiden wegen ihrer Persistenz in der Umwelt, ihrer bioakkumulierenden Eigenschaften und ihrer Toxizität (den so genannten PBT- Eigenschaften) immer größeren Produktions- und Anwendungsbeschränkungen unterworfen. Hiervon betroffen sind auch Tenside wie Pertluoroctylsulfonat (PFOS) und Perfluoroctansäure (PFOA). Insbesondere PFOA-Salze, wie das Ammoniumsalz der Perfluoroctansäure (APFO) wurden bisher vielfach als Tenside in der Emulsionspolymerisation von PTFE eingesetzt und waren für Grundwasserbelastungen in den USA verantwortlich.

Daher besteht der Bedarf die PBT-Fluortenside durch Substanzen mit ähnlichen technischen Eigenschaften aber verbessertem Abbauverhalten zu ersetzen.

Demgemäß ist es die Aufgabe der vorliegenden Erfindung, alternative Verbindungen für die Benetzung und das Dispergieren von festen Fluorpolymerpartikeln oder zum Emulgieren von flüssigen Fluorkohlenwasserstofftropfen zur Verfügung zu stellen.

Gelöst wird die oben genannte Aufgabe durch die Verwendung von Phosphinsäuren bzw. deren Salzen und/oder Phosphonsäuren bzw. deren Salzen zur Benetzung von Fluorverbindungen, durch Beschichtungslösungen enthaltend solche Verbindungen und durch Suspensions- und Emulsionspolymerisationsverfahren in denen solche Verbindungen verwendet werden.

Vorzugsweise werden die Phosphinsäuren bzw. deren Salzen und/oder Phosphonsäuren bzw. deren Salzen zur Herstellung von, insbesondere wässrigen, Suspensionen oder Emulsionen von Fluorverbindungen verwendet. Außerdem werden die erfindungswesentlichen Verbindungen bevorzugt zur Herstellung von Fluorpolymeren eingesetzt.

Die erfindungswesentlichen Phosphinsäuren und/oder deren Salze sind vorzugsweise jene der allgemeinen Formel (I)

Rf¹Rf²P(O)O⁻X⁺ (I)

wobei Rf¹ und Rf² jeweils unabhängig voneinander verzweigte oder unverzweigte Alkylketten der Formel CₙF_{2n-z+1}H_{z} sein können, mit n = 2-16, z = 0-3, und worin X = H, Alkalimetall oder [NR₄]⁺ bedeutet. Verbindungen der allgemeinen Formel (I) sind aus WO 03/082884 bekannt, wo sie in optischen Systemen eingesetzt werden.

Bevorzugt werden Verbindungen verwendet mit X = Alkalimetall oder [NR₄]⁺. In einer Erfindungsvariante werden bevorzugt Verbindungen mit X = [NR₄]⁺ verwendet. Des Weiteren sind Verbindungen bevorzugt, in denen n = 4-8 ist. Ein bevorzugter Wert für z ist 0. Bei den genannten Phosphinsäuren und/oder deren Salzen können Rf¹ und Rf² gleich oder verschieden sein. Insbesondere sind Verbindungen bevorzugt, in denen Rf¹ und Rf² gleich sind.

Die erfindungswesentlichen Phosphonsäuren und/oder deren Salze sind jene der allgemeinen Formel (II)

Rf¹P(O)(O⁻X⁺(O⁻X⁻⁺) (II)

wobei Rf¹ verzweigte oder unverzweigte Alkylketten der Formel CₙF_{2n-z+1}H_{z} bedeutet, mit n = 2-16, z = 0-3, und worin X und X' unabhängig voneinander H, Alkalimetall oder [NR₄]⁺ bedeuten.

Bevorzugt werden Verbindungen verwendet mit X und/oder
X' = Alkalimetall oder [NR₄]⁺. In einer Erfindungsvariante werden bevorzugt Verbindungen mit X und/oder X' = [NR₄]⁺ verwendet. Des Weiteren sind Verbindungen bevorzugt, in denen n = 4-8 ist. Ein bevorzugter Wert für z ist
0. Bei den genannten Phosphonsäuren können X und X' gleich oder verschieden sein, vorzugsweise sind X und X' gleich.

Wenn X und/oder X' = Alkalimetall ist, so bedeutet dies sowohl für die erfindungsgemäßen Phosphinsäuresalze als auch für die erfindungsgemäßen Phosphonsäuresalze insbesondere Lithium, Natrium oder Kalium, vorzugsweise Kalium oder Natrium.

Im Falle von X und/oder X' = [NR₄]⁺ bedeutet R sowohl für die erfindungsgemäßen Phosphinsäuresalze als auch für die erfindungsgemäßen Phosphonsäuresalze jeweils unabhängig voneinander H, geradkettiges oder verzweigtes Alkyl mit 1-20 C-Atomen, gesättigtes Cycloalkyl mit 3-7 C-Atomen Aryl, oder Alkyl-Aryl, das mit Alkylgruppen mit 1-6 C-Atomen substituiert sein kann, bedeutet, wobei ein oder mehrere R teilweise oder vollständig mit Halogenen, insbesondere -F, substituiert sein können. Bevorzugt ist R = H, geradkettiges oder verzweigtes Alkyl mit 1-4 C-Atomen, insbesondere = H, CH₃. In einer besonders bevorzugten Erfindungsvariante ist X und/oder X' = [NH₄]⁺.

Bevorzugt sind die Alkylketten von Rf¹ und Rf² unverzweigt. Besonders bevorzugte Phosphinsäuren und/oder deren Salze der Formel (I) oder Phosphonsäuren und/oder deren Salze der Formel (II) sind jene mit n = 4 oder 6, z = 0 und X und/oder X' = H oder Alkalimetall oder [NR₄]⁺, insbesondere mit X = H oder [NH₄]⁺.

Als besonders bevorzugte Verbindungen der Formeln I und II werden solche Verbindungen verwendet, in denen sowohl X, R, Rf¹ und Rf² als auch n und z die jeweiligen bevorzugten Bedeutungen haben. Folgende Phosphinsäuren und/oder deren Salze sind insbesondere bevorzugt: (C₄F₉)₂P(O)OH und (C₆F₁₃)₂P(O)OH bzw. die entsprechenden Alkalimetall- oder Ammoniumsalze. Folgende Phosphonsäuren und/oder deren Salze sind insbesondere bevorzugt: (C₄F₉)P(O)(OH)₂ und (C₆F₁₃)P(O)(OH)₂ bzw. die entsprechenden Alkalimetall- oder Ammoniumsalze.

Die erfindungsgemäßen alternativen Fluortenside eignen sich als Netz- und Dispergiermittel für Fluorverbindungen, insbesondere für Fluorpolymere, oder als Emulgiermittel für fluororganische Flüssigkeiten in wässrigen Medien. Die wesentliche Eigenschaft, die die vorliegenden Fluorverbindungen gegenüber konventionellen Fluortensiden hervorhebt, ist ihre Hydrolysierbarkeit in alkalischen, insbesondere in heißen alkalischen, Lösungen zu Fluorkohlenwasserstoffprodukten, die in Bezug auf ihre Umweltverträglichkeit akzeptablen sind, da sie in der Atmosphäre photooxidieren und kein ozonschädigendes Potential haben. Dies bietet die Möglichkeit, Rückstände und Abfälle von industriellen Verfahren einfach mit Standardchemikalien zu behandeln, so dass die Tenside chemisch zerstört und nicht in die Umwelt freigesetzt werden. Im Gegensatz zu Fluortensiden wie PFOS und PFOA, die im Wesentlichen stabil gegen Hydrolyse sind, kann die Empfindlichkeit der erfindungswesentlichen Verbindungen gegenüber hydrolytischer Spaltung dazu beitragen, ihre Umweltlebensdauer auf ein akzeptables Maß zu senken.

Die erfindungsgemäßen Phosphinsäuren oder deren Salze und/oder Phosphonsäuren oder deren Salze können insbesondere zur Herstellung stabiler Emulsionen und Suspensionen von Fluorverbindungen, speziell von Fluorpolymeren, verwendet werden. Sie eignen sich bevorzugt als Dispergier- bzw- Emulgiermittel in Polymerisationsverfahren. Grundsätzlich eignen sich die Phosphinsäuren und deren Salze und die Phosphonsäuren und deren Salze für alle dem Fachmann bekannten Polymerisationsverfahren, insbesondere aber für Emulsions- und Suspensionspolymerisationsverfahren.

Gerade bei Emulsions- und Suspensionspolymerisationsverfahren werden hohe Anforderungen an die grenzflächenaktiven Verbindungen, die zur Benetzung der Edukte und Produkte verwendet werden, gestellt. Insbesondere bei der Herstellung von Fluorpolymeren mittels Emulsions- oder Suspensionspolymerisation werden spezielle Tenside benötigt, da Fluorpolymere sowohl hydrophob als auch lipophob sind. Die erfindungsgemäßen alternativen fluorhaltigen Verbindungen sind für diese Anwendungen besonders geeignet.

Suspension- und Emulsionspolymerisationsverfahren sind gängige, dem Fachmann wohl bekannte Polymerisationsverfahren. Bei Suspension- und Emulsionspolymerisationsverfahren enthält das System immer mindestens vier Bestandteile: (überwiegend) wasserunlösliches Monomer, Wasser, Dispergiermittel bzw. Emulgiermittel und Initiator.

In der Suspensionspolymerisation werden überwiegend wasserunlösliche Monomere eingesetzt, die als diskontinuierliche Phase in Form feiner Tröpfchen in einer kontinuierlichen Wasser-Phase unter Rühren verteilt werden. Die Polymerisation wird gestartet durch öllösliche, d. h. in den Monomeren gelöste Initiatoren. Ein Koagulieren der Tröpfchen wird durch zugesetzte Dispergiermittel verhindert. Die resultierenden Polymere fallen in Form kleiner Perlen an.

In der Emulsionspolymerisation werden wasserunlösliche Monomere mit Hilfe von Emulgatoren in Wasser solubilisiert, indem sie in die vom Emulgator gebildeten Mizellen einlagert werden. Unter Verwendung wasserlöslicher Initiatoren werden die so emulgierten Monomere dann polymerisiert. Durch die Polymerisation werden die Mizellen immer größer und gehen schließlich in kugelförmige Polymerteilchen, so genannte Latexteilchen, über. Die resultierenden Polymere sind in vielen Anwendungen direkt einsetzbar.

Die Durchführung der genannten Polymerisationsverfahren ist dem Fachmann geläufig. Die erfindungsgemäßen Verfahren haben den Vorteil, dass sie in einfacher Weise zu stabilen Polymerdispersionen führen und nach entsprechender Aufarbeitung weniger umweltgefährdende Rückstände gebildet werden.

In einer weiteren Ausführungsform der vorliegenden Erfindung können die die Phosphinsäuren bzw. deren Salze und/oder Phosphonsäuren bzw. deren Salze in Kombination mit weiteren grenzflächenaktiven Substanzen eingesetzt werden. Hierzu eignen sich grundsätzlich alle dem Fachmann bekannten Arten von grenzflächenäktiven Substanzen, vorzugsweise sind die grenzflächenaktiven Substanzen ausgewählt aus der Gruppe der Perfluoralkylsulfonate, insbesondere handelt es sich dabei um Perfluoroctylsulfonsäure (PFOS) oder deren Salze. Durch den Einsatz der erfindungswesentlichen alternativen Fluortenside kann jedoch der Anteil der zuzusetzenden grenzflächenaktiven Substanz in vielen Fällen gesenkt werden.

Die genannten Phosphin- und Phosphonsäuren bzw. die Salze der Phosphin- und Phosphonsäuren erweisen sich unter den üblichen Polymerisationsbedingungen als besonders stabil. So sind die genannten erfindungsgemäßen Verbindungen auch gegen stark saure Medien beständig, weisen eine hohe Stabilität auf und führen in den genannten Polymerisationsverfahren zu stabilen Polymerisationsphasen. Der Einsatz der erfindungswesentlichen Verbindungen kann erheblichen Nutzen in der Anwendung haben, wie z. B. eine verbesserte Benetzung der Edukte und Produkte, insbesondere fester Fluorpolymerpartikeln, und einen gleichmäßigeren Polymerisationsverlauf.

Zusätzlich können die erfindungsgemäßen Verbindungen in alkalischen Medien hydrolysiert werden, wobei sich nicht umweltschädliche Kohlenwasserstoffe R_{f}H bilden, die in der Atmosphäre photooxidieren können und kein ozonschädigendes Potential haben. Dies ist insbesondere im Vergleich zur Verwendung von Perfluoralkylsulfonsäuren und deren Salzen ein besonderer Vorteil, da die Polymerisationslösungen und/oder - rückstände nun einfacher unter Zerstörung der grenzflächenaktiven Substanz chemisch behandelt werden können.

Durch die erfindungsgemäß beanspruchte vollständige oder teilweise Ersetzung von Perfluoralkylsulfonsäuren und deren Salzen in den Polymerisationsverfahren wird die Freisetzung persistenter, toxischer und bioakkumulativer Perfluoralkylsulfonsäuren wie zum Beispiel von Perfluoroktylsulfonat in die Umwelt reduziert. Darüber hinaus haben die genannten Verbindungen den Vorteil, dass bei deren Verwendung in Polymerisationsverfahren eine verringerte Gefahr der langfristigen Umweltverschmutzung mit chemischen Abfällen, die nicht abbaubar sind, besteht.

Außer den in der Beschreibung genannten bevorzugten Verbindungen, deren Verwendung, Mitteln und Verfahren sind weitere bevorzugte Kombinationen der erfindungsgemäßen Gegenstände in den Ansprüchen offenbart.

Die folgenden Beispiele erläutern die vorliegende Erfindung näher, ohne den Schutzbereich zu beschränken. Insbesondere sind die in den Beispielen beschriebenen Merkmale, Eigenschaften und Vorteile der den betreffenden Beispielen zugrunde liegenden Verbindungen auch auf andere nicht im Detail aufgeführte, aber unter den Schutzbereich fallende Stoffe und Verbindungen anwendbar, sofern an anderer Stelle nicht Gegenteiliges gesagt wird. Im Übrigen ist die Erfindung im gesamten beanspruchten Bereich ausführbar und nicht auf die hier genannten Beispiele beschränkt.

### Beispiele:

Test der Wirksamkeit von (C₄F₉)₂P(O)O⁻NH₄⁺ auf die Benetzung und Dispergierung von Polytetrafluorethylen (PTFE)-Partikeln in Wasser:

Hierfür werden die Ammoniumsalze von (C₄F₉)₂P(O)OH (Bis(nonafluorbutyl)phosphinsäure)) und C₇F₁₅C(O)OH (Perfluoroktansäure, Stand der Technik) hergestellt und in Bezug auf ihre Dispergierwirkung auf PTFE Partikel (Perflutel 290, Hersteller Miteni) in Wasser miteinander verglichen.

Die Dispergierwirkung wird visuell durch einen Schütteltest in transparenten Probeflaschen (Glas, 25 ml) ermittelt, bei dem die Dispergierung der PTFE

Partikel mit Hilfe einer Schüttelapparatur (Typ W3 Herstellerfirma Vortex) und eines Ultraschallbads (Typ RK 52 H, Herstellerfirma Bandelin) erfolgt.

Eine definierte Menge an Netzmittellösung (Ammoniumsalze von (C₄F₉)₂P(O)OH und PFOA) wird dafür in den Probeflaschen vorgelegt und das PTFE Pulver ergänzt. Nach der Dispergierung wird visuell verglichen, ob eine Benetzung der PTFE-Partikel erfolgt (hydrophobe PTFE-Partikel werden in Wasser stabilisiert) oder ob die PTFE-Partikel unbenetzt bleiben (hydrophobe PTFE-Partikel schwimmen auf der Oberfläche). Als Referenz wird eine O-Probe ohne Dispergieradditiv herangezogen.

Folgende Proben werden für den Dispersiontest angefertigt:
**Probe 1:** H₂O + PTFE Pulver (O-Probe)
**Probe 2:** Wässrige Lösung von C₇F₁₅C(O)O⁻NH₄⁺ + PTFE Pulver
**Probe 3:** Wässrige Lösung von (C₄F₉)₂P(O)O⁻NH₄⁺ + PTFE Pulver

Die genauen Einwaagen für Probe 1-3 sind in den folgenden Tabellen (Tabelle 1-3) wiedergegeben.

**Tab.1 Herstellung der Ammoniaklösung für Probe 2 und 3**

| **Probe** | **Einwaage** **NH₄⁺OH⁻-Lösung [g]** | **Einwaage** **VE-H₂O [g]** | **Konzentration** **[mol/l]** |
|---|---|---|---|
| - | 0,88 (32%ig) | 165,01 | 0,1 |
| 2 | 5,0018 (0,1 M) | 5,0325 | 0,05 |
| 3 | 7,5113 (0,1 M) | 7,5179 | 0,05 |

Die Ammoniaklösungen für Probe 2 und 3 werden unter folgender Annahme hergestellt: Dichte (0,1 M Ammoniaklösung)=1g/cm³. Die Zugabe der Ammoniaklösung zu den Dispergieradditiven erfolgt in einem stöchiometrischen Verhältnis (siehe Tab. 2)

**Tab.2 Herstellung der Ammoniumsalze für Probe 2 und 3**

| **Probe** | **Einwaage** **NH₄⁺OH⁻-** **Lösung [g]** | **Einwaage** **Dispergieradditive** **[g]** | **Konzentration** **Salz [mol/l]** |
|---|---|---|---|
| 2 | 10,0343(0,05M) | 0,2168 (PFOA) | 0,05 |
| 3 | 9,4990 (0,05M) | 0,2237 ((C₄F₉)₂P(O)OH)) | 0,05 |

Die Salzlösungen werden mit Hilfe der Schüttelapparatur (2min Stufe 6) und des Ultraschallbads (10min) in Lösung gebracht. Es bilden sich transparente Lösungen. Danach wird das PTFE-Pulver in die Probeflaschen ergänzt (siehe Tab. 3).

**Tab.3 Herstellung der Dispersionen**

| **Proben** | **Einwaage** **Salzlösung/H₂O[g]** | **Einwaage** **Perflutel** **290 [g]** | **Konzentration** **PTFE Pulver** **Perflutel 290 [%]** |
|---|---|---|---|
| 1 | 10,0156 H₂O | 0,9884g | 9% |
| 2 | 10,2511 C₇F₁₅C(O)O⁻NH₄⁺ | 0,9970 | 9% |
| 3 | 9,7227 (C₄F₉)₂P(O)O⁻NH₄⁺ | 0,9720 | 9% |

Die Dispergierung des PTFE- Pulvers wird für Probe 1-3 mit der Schüttelapparatur (2min Stufe 6) und dem Ultraschallbad (40min) durchgeführt. Die Ergebnisse des Dispersionstest sind in Tabelle 4 wiedergegeben und zeigen, dass sowohl C₇F₁₅C(O)O⁻NH₄⁺(Ammoniumsalz von PFOA) als auch (C₄F₉)₂P(O)O⁻NH₄⁺ (Ammoniumsalz von Bis(nonafluorbutyl)phosphinsäure) eine benetzende Wirkung auf die PTFE Partikel hat. Die Partikel werden im Gegensatz zur O-Probe, bei der die Partikel an der Oberfläche separieren, von den Tensidlösungen benetzt und sinken nach unten. Dieser Effekt ist bei vergleichbarer Additiv- und PTFE-Pulver Konzentration für PFOA etwas stärker ausgeprägt als für (C₄F₉)₂P(O)OH.

**Tab.4 Ergebnisse des Dispersionstest**

| | Probe 1 | Probe 2 | Probe 3 |
|---|---|---|---|
| Konzentration Dispergieradditiv | 0% | 2,0% C₇F₁₅C(O)O⁻ NH₄⁺ | 2,2% (C₄F₉)₂P(O)O⁻ NH₄⁺ |
| Konzentration PTFE | 9% | 9% | 9% |
| Beobachtung | PTFE Pulver separiert an Oberfläche | PTFE Pulver sinkt nach unten | PTFE Pulver sinkt nach unten, ein Teil sammelt sich oben an |

### B) Abbaubarkeit

### Hydrolyse in alkalischer Lösung

Nach dem Mischen von 450 mg (C₄F₉)₂P(O)OH mit 4,5 ml 20%iger wässriger NaOH-Lösung bildet sich sofort ein Niederschlag von (C₄F₉)₂P(O)ONa, das eine begrenzte Wasserlöslichkeit hat. Innerhalb von drei Tagen bei Raumtemperatur löst sich der Niederschlag vollständig durch die Hydrolyse von (C₄F₉)₂P(O)ONa zu (C₄F₉)P(O)(ONa)₂ auf. Das gebildete Produkt enthält gasförmiges C₄F₉H, auch bekannt als HFC-329ccb, das vom US EPA als möglicher Ersatz für HFC angesehen wird. Der zweite Schritt der Hydrolyse zu Na₃PO₄ erfolgt langsam, selbst bei 80°C. Von den Daten des nicht bioakkumulierenden PFBS (C₄F₉SO₃H) ausgehend wird erwartet, dass C₄F₉P(O)(ONa)₂, dessen Anion wegen der zusätzlichen negativen Ladung im Vergleich zu PFBS noch stärker hydrophil ist, auch nicht bioakkumulierend sein wird.

## Patentansprüche

1. Verwendung von Phosphinsäuren und/oder deren Salzen gemäß Formel (I) oder von Phosphonsäuren und/oder deren Salzen gemäß Formel (II)
Rf¹Rf²P(O)O⁻X⁺ (I)
Rf¹P(O)(O⁻X⁺(O⁻X⁻⁺) (II)
wobei Rf¹ und Rf² jeweils unabhängig voneinander verzweigte oder unverzweigte Alkylketten der Formel CₙF_{2n-z+1}H_{z} sind, mit n = 2-16, z = 0-3, und worin X und X' = jeweils unabhängig voneinander H, Alkalimetall oder [NR₄]⁺ bedeutet, wobei R jeweils unabhängig voneinander H, geradkettiges oder verzweigtes Alkyl mit 1-20 C-Atomen, gesättigtes Cycloalkyl mit 3-7 C-Atomen Aryl, oder Alkyl-Aryl, das mit Alkylgruppen mit 1-6 C-Atomen substituiert sein kann, bedeutet und ein oder mehrere R teilweise oder vollständig mit Halogenen, insbesondere -F, substituiert sein,
zur Benetzung von Fluorverbindungen in Beschichtungslösungen oder
von Fluorverbindungen in Suspensions- oder
Emulsfonspolymerlsationsvertahren.

2. Verwendung gemäß Anspruch 1, **dadurch gekennzeichnet, dass** die Beschichtungslösungen Fluorpolymere enthalten.

3. Verwendung gemäß Anspruch 1, **dadurch gekennzeichnet, dass** in den Suspensions- oder Emulsionspolymerisationsverfahren Fluorpolymere eingesetzt werden.

4. Verwendung gemäß Anspruch 1, **dadurch gekennzeichnet, dass** in den Suspensions- oder Emulsionspolymerisationsverfahren Fluorpolymere gebildet werden.

5. Verwendung gemäß einem oder mehreren der Ansprüche 1 bis 4, **dadurch gekennzeichnet, dass** Phosphinsäuren und/oder deren Salze verwendet werden, für die in Formel (I) Rf¹ und Rf² gleich sind, mit n = 4-8, z = 0, und X = Alkalimetall oder [NR_{4]}⁺ bedeutet, wobei R = H oder CH₃ ist.

6. Verwendung gemäß einem oder mehreren der Ansprüche 1 bis 5, **dadurch gekennzeichnet, dass** die Phosphinsäuren und/oder deren Salze ausgewählt sind aus (C₄F₉)₂P(O)OH, (C₆F₁₃)₂P(O)OH und deren entsprechenden Alkalimetallsalzen.

7. Verwendung gemäß einem oder mehreren der Ansprüche 1 bis 5, **dadurch gekennzeichnet, dass** (C₄F₉)₂P(O)O⁻ NH₄⁺ verwendet wird.

8. Verwendung gemäß einem oder mehreren der Ansprüche 1 bis 4, **dadurch gekennzeichnet, dass** Phosphonsäuren und/oder deren Salze verwendet werden, für die in Formel (II) n = 4-8, z = 0, und X und X' = Alkalimetall oder [NR₄]⁺ sind, wobei R = H oder CH₃ ist.

9. Verwendung gemäß Anspruch 8, **dadurch gekennzeichnet, dass** die Phosphonsäuren und/oder deren Salze ausgewählt sind aus (C₄F₉)₂P(O)OH, (C₆F₁₃)₂P(O)OH und deren entsprechenden Alkalimetallsalzen.

10. Verwendung gemäß einem oder mehreren der Ansprüche 1 bis 9, **dadurch gekennzeichnet, dass** die Phosphinsäuren bzw. deren Salze und/oder Phosphonsäuren bzw. deren Salze in Kombination mit weiteren grenzflächenaktiven Substanzen eingesetzt werden.

## Claims

1. Use of phosphinic acids and/or salts thereof of formula (I) or phosphonic acids and/or salts thereof of formula (II)
Rf¹Rf²P(O)O⁻X⁺ (I)
Rf¹P(O)(O⁻X⁺(O⁻X⁻⁺) (II)
where Rf¹ and Rf² are each, independently of one another, branched or unbranched alkyl chains of the formula CₙF_{2n-z+1}H_{z}, where n = 2-16,
z = 0-3, and in which X and X' = each, independently of one another, H, alkali metal or [NR₄]⁺, where R in each case, independently of one another, denotes H, straight-chain or branched alkyl having 1-20 C atoms, saturated cycloalkyl having 3-7 C atoms, aryl, or alkyl-aryl, which may be substituted by alkyl groups having 1-6 C atoms, and one or more R may be partially or fully substituted by halogens, in particular -F, for wetting fluorine compounds in coating solutions or fluorine compounds in suspension or emulsion polymerisation processes.

2. Use according to Claim 1, **characterised in that** the coating solutions comprise fluoropolymers.

3. Use according to Claim 1, **characterised in that** fluoropolymers are employed in the suspension or emulsion polymerisation processes.

4. Use according to Claim 1, **characterised in that** fluoropolymers are formed in the suspension or emulsion polymerisation processes.

5. Use according to one or more of Claims 1 to 4, **characterised in that** use is made of phosphinic acids and/or salts thereof for which, in formula (I), Rf¹ and Rf² are identical, where n = 4-8, z = 0, and X = alkali metal or [NR₄]⁺, where R = H or CH₃.

6. Use according to one or more of Claims 1 to 5, **characterised in that** the phosphinic acids and/or salts thereof are selected from (C₄F₉)₂P(O)OH, (C₆F₁₃)₂P(O)OH and corresponding alkali metal salts thereof.

7. Use according to one or more of Claims 1 to 5, **characterised in that** (C₄F₉)₂P(O)O⁻ NH₄⁺ is used.

8. Use according to one or more of Claims 1 to 4, **characterised in that** use is made of phosphonic acids and/or salts thereof for which, in formula (II), n = 4-8, z = 0, and X and X' = alkali metal or [NR₄]⁺, where R = H or CH₃.

9. Use according to Claim 8, **characterised in that** the phosphonic acids and/or salts thereof are selected from (C₄F₉)₂P(O)OH, (C₆F₁₃)₂P(O)OH and corresponding alkali metal salts thereof.

10. Use according to one or more of Claims 1 to 9, **characterised in that** the phosphinic acids or salts thereof and/or phosphonic acids or salts thereof are employed in combination with further surface-active substances.

## Revendications

1. Utilisation d'acides phosphiniques et/ou de sels de ceux-ci de formule (I) ou d'acides phosphoniques et/ou de sels de ceux-ci de formule (II)
Rf¹Rf²P(O)O⁻X⁺ (I)
Rf¹P(O)(O⁻X⁺(O⁻X⁻⁺) (II)
où Rf¹ et Rf² sont chacun, indépendamment l'un de l'autre, des chaînes alkyle ramifiées ou non ramifiées de formule CₙF_{2n-z+1}H_{z}, où n = 2-16,
z = 0-3, et où X et X' = chacun, indépendamment l'un de l'autre, H, un métal alcalin ou [NR₄]⁺, où R dans chaque cas, indépendamment l'un de l'autre, désigne H, alkyle à chaîne linéaire ou ramifiée ayant 1-20 atomes de C, cycloalkyle saturé ayant 3-7 atomes de C, aryle, ou alkyl-aryle, qui peut être substitué par des groupements alkyle ayant 1-6 atomes de C, et un ou plusieurs R peuvent être partiellement ou totalement substitués par des halogènes, en particulier -F,
pour mouiller des composés fluorés dans des solutions de revêtement ou des composés fluorés dans des procédés de polymérisation en suspension ou en émulsion.

2. Utilisation selon la revendication 1, **caractérisée en ce que** les solutions de revêtement comprennent des polymères fluorés.

3. Utilisation selon la revendication 1, **caractérisée en ce que** les polymères fluorés sont employés dans les procédés de polymérisation en suspension ou en émulsion.

4. Utilisation selon la revendication 1, **caractérisée en ce que** les polymères fluorés sont formés dans les procédés de polymérisation en suspension ou en émulsion.

5. Utilisation selon l'une ou plusieurs des revendications 1 à 4, **caractérisée en ce que** l'on utilise des acides phosphiniques et/ou des sels de ceux-ci pour lesquels, dans la formule (I), Rf¹ et Rf² sont identiques, où n = 4-8, z = 0, et X = un métal alcalin ou [NR₄]⁺, où R = H ou CH₃.

6. Utilisation selon l'une ou plusieurs des revendications 1 à 5, **caractérisée en ce que** les acides phosphiniques et/ou les sels de ceux-ci sont choisis parmi (C₄F₉)₂P(O)OH, (C₆F₁₃)₂P(O)OH et des sels de métaux alcalins correspondants de ceux-ci.

7. Utilisation selon l'une ou plusieurs des revendications 1 à 5, **caractérisée en ce que** (C₄F₉)₂P(O)O⁻ NH₄⁺ est utilisé.

8. Utilisation selon l'une ou plusieurs des revendications 1 à 4, **caractérisée en ce que** l'on utilise des acides phosphoniques et/ou des sels de ceux-ci pour lesquels, dans la formule (II), n = 4-8, z = 0, et X et X' = un métal alcalin ou [NR₄]⁺, où R = H ou CH₃.

9. Utilisation selon la revendication 8, **caractérisée en ce que** les acides phosphoniques et/ou les sels de ceux-ci sont choisis parmi (C₄F₉)₂P(O)OH, (C₆F₁₃)₂(O)OH et des sels de métaux alcalins correspondants de ceux-ci.

10. Utilisation selon l'une ou plusieurs des revendications 1 à 9, **caractérisée en ce que** les acides phosphiniques ou des sels de ceux-ci et/ou les acides phosphoniques ou des sels de ceux-ci sont employés en combinaison avec d'autres substances tensioactives.
